Europäisches Patentamt

European Patent Office

Office européen des brevets

(19)

(11) Publication number: **0 316 188**
**A2**

# (12) EUROPEAN PATENT APPLICATION

(21) Application number: 88310628.8

(51) Int. Cl.⁴: **G 11 B 11/10**

(22) Date of filing: 11.11.88

(30) Priority: 12.11.87 US 119116  10.02.88 US 154844
10.02.88 US 154240

(43) Date of publication of application:
17.05.89 Bulletin 89/20

(84) Designated Contracting States: **DE FR GB IT NL**

(71) Applicant: **MOVID Information Technology, Inc.**
884 Morgan Avenue
Schenectady New York 12309 (US)

(72) Inventor: Kryder, Mark H., c/o Magnetics Tec. Center,
Carnegie-Mellon Uni., Hammerschlag Hall D220,
Pittsburgh, Pennsylvania, (US)

Shieh, Han-Ping D., c/o Magnetics Tec. Center,
Carnegie-Mellon Uni., Hammerschlag Hall D220,
Pittsburgh, Pennsylvania, (US)

(74) Representative: Huntingford, David Ian et al
W.P. THOMPSON & CO. Coopers Building Church Street
Liverpool L1 3AB (GB)

(54) Method and apparatus for direct overwriting of digital data recorded on magneto-optical recording media including a direct overwrite magneto-optic system for strip erasing and recording elongated domains and a single-head, direct overwrite magneto-optic system.

(57) A magneto-optic information storage system employing a ferrimagnetic thin film recording medium (8) in which the magnetization is disposed perpendicular to a plane in which the film is disposed and irradiating apparatus (38) for temporarily irradiating at least portions of selected regions of the medium (8) to reverse the net magnetization of those portions without an externally applied bias magnetic field and at ambient or elevated temperatures and having a writing control circuit (30) and an erasing control circuit (31) connected to the irradiating apparatus (38) to impinge light pulses on the selected regions of the medium (8) in first one direction and then another. The system employs a laser (14) to record new domains and to erase previously recorded domains and is also used to read, compare and receive data bits to be recorded and to record such data by the write control circuit (30) when the received data is different from data already on the thin film medium (8).

FIG. 1M

EP 0 316 188 A2

**Description**

## METHOD AND APPARATUS FOR DIRECT OVER-WRITING OF DIGITAL DATA RECORDED ON MAGNETO-OPTICAL RECORDING MEDIA INCLUDING A DIRECT OVERWRITE MAGNETO-0PTIC SYSTEM FOR STRIP ERASING AND RECORDING ELONGATED DOMAINS AND A SINGLE-HEAD, DIRECT OVERWRITE MAGNETO-0PTIC SYSTEM

The present invention relates to magneto-optic recording and erasing of magnetic domains, to magneto-optic data storage and, more particularly, to magneto-optic compensation point recording and erasing without external magnetic bias, as well as to methods, apparatus and systems for the modification of recorded data by direct overwrite modification of digital data stored in domains of a magneto-optic recording media.

Thin film, ferrimagnetic materials such as rare earth-transition metal amorphous alloys of terbium iron cobalt (TbFeCO), gadolinium terbium cobalt (GdTbCo) and gadolinium terbium iron cobalt (GdTbFeCo) have been known as high-density, magneto-optic recording media. Magnetic domains on the order of one micrometer in size can be recorded in the magneto-optic material. These ferrimagnetic materials have high coercivity at room temperature and low coercivity at high temperatures. The recording medium, preferably in a coated disk form, can be magnetized in a particular direction perpendicular to the surface by heating the disk in the presence of an external magnetic field, and then permitting the disk to cool or by applying a saturating magnetic field. Data can thereafter be stored on the disk by heating a small spot (preferably by laser energy) in the presence of an external magnetic field of the desired magnetic polarity. The heated area is magnetized in the direction of the external magnetic field when the area cools and returns to the high coercivity state at room temperature. Data on the disk is "read" by noting the effect on polarized light reflected off the disk surface. Such systems operating with external magnetic bias operate by either heating above the compensation temperature of the medium or by heating above the Curie temperature of the medium. Systems using a reversible external magnetic field have the advantage of directly controlling the recorded magnetic state according to the polarity of the applied external field, but tend to be slow in operation.

Magneto-optic recording systems operating without external magnetic bias are also known. Compensation point systems operating without magnetic bias developed by some of the inventors hereof use a magnetic-optic medium with a compensation temperature a few tens of degrees C above room temperature and preferably at least $50°C$ below the Curie point temperature. A stable magnetic domain can be recorded on such a medium by heating a local area above the compensation point using a laser beam and by relying upon the magnetic self bias to invert the magnetic polarity within the domain. The domain can subsequently be erased by applying a lower energy level laser pulse to create a domain within the previously recorded domain. If the internal domain is created at the correct laser pulse energy level, the internal domain wall tends to expand as the surrounding domain wall tends to contract until the domain walls annihilate one another, thereby erasing the previously recorded domain.

Curie point systems operating without external magnetic bias are also known, but operate on a significantly different principle. The magneto-optic medium must have a relatively low Curie point, preferably in the range of $80°$ to $180°$. If an area is, heated above the Curie temperature, the heated area loses its magnetization and, upon cooling, forms a stable domain of reverse magnetic polarity at approximately one-half the radius of the area heated above the Curie point. To erase a previously recorded domain, the previously recorded domain area is heated above the Curie point and the magnetization of the heated area disappears. If the erase pulse is small and just sufficient to heat the area of the prior domain above the Curie point, the domain of reverse magnetic polarity that tends to form upon cooling is unstable and therefore collapses upon cooling.

Such a Curie point system operating without external magnetic bias is disclosed in Japanese patent application 59/1989-113506 "Method and Apparatus for Opto-Magnetic Recording, Reading and Erasure", filed December 21, 1982, published June 30, 1984, and identifying M. Okada et al as inventors. The magneto-optic medium in this system has a relatively low Curie point, in the range of $80°$ to $180°C$.

With the Curie point system described by Okada et al, recording and erasing are achieved by a single-beam, direct over-write operation. The laser pulse used to record a spot domain is greater than the laser pulse required to erase that domain. Therefore, a large record pulse creates a domain indicating a "1" state regardless of prior magnetic history and, likewise, a smaller erase pulse results in the absence of a domain indicating a "0" state regardless of prior magnetic history. In both cases, the area heated above the Curie point loses is magnetism thereby wiping out the prior magnetic history. The existence of a domain, or lack thereof, when the area cools depends on the size of the area heated above the Curie point.

Biasless systems operating without external magnetic bias do not suffer from the time lag required with changing magnetic fields, and therefore such biasless systems are capable of extremely high operating speeds. Such biasless systems also avoid the need for bulky magnetic components close to the recording medium.

In the previously known systems the recorded domains were thought to stabilize within cylindrical domain walls corresponding to the lowest energy configurations. See, for example, "The Theory of Cylindrical Magnetic Domains" by A.A. Thiele from the Bell System Technical Journal Vol. 48, No. 10, December, 1969. The mobility of magnetic domains resulted in the development of magnetic "bubble" memories. In creating a magnetic domain, if the applied thermal energy is too low, the domain will collapse. If the applied thermal energy exceeds a minimum threshold level (and is not too large), a domain is established which expands. There are several counteracting forces affecting the dynamics of domain formation which tend to form the domain at a minimum energy level configuration.

It has been found that in dynamic systems, stable domains can be created in elongated or strip configurations using biasless recording. With a rotating disk medium, if the correct amount of heat energy is applied by means of a laser beam moving across the surface, an elongated strip domain is created which does not break up into discrete domains. The elongated strip domains can be recorded by continuous energizations of the laser beam or by closely-spaced pulse energization of the laser. Such elongated strip domains are particularly useful in pulse-length modulated and run-length-limited coded recordings which can significantly increase the recorded data density on the recording medium.

It has also been found, surprisingly, that a continuously energized laser beam moving across the disk surface at a lower energy level than that used to "write" a strip domain, erases any domain in the path of the beam. Alternatively, a similar erase operating can be achieved by discrete low energy "erase" pulses spaced at distances less than one-half the minimum anticipated domain width or diameter.

A preferred method of operation utilizing the newly-discovered technique is to continuously energize the laser at the "erase" level whenever data is being recorded and to superimpose thereon the higher "write" level whenever a domain is to be recorded. With this technique the desired data is recorded with a single laser pass across the medium regardless of the prior magnetic history of the medium. Another preferred technique is to energize the laser at the continuous "erase" level when recording and to superimpose the closely spaced "write" pulses thereon when strip domains are desired. Yet another technique is to energize the laser at a fixed power level such that continuous energization is at the correct power level for writing and such that the duty cycle of the pulsed laser achieves erasing. Still another alternative is to normally apply closely spaced "erase" pulses, and increase the amplitude of the closely spaced pulses to the "write" level where a domain is desired.

For the purposes of this application, "elongated domains" are those where the length of the domain in the direction of the track is at least 1.5 times the width and "strip erase" erases domains in an area along the track at least 1.5 times the track width.

Still further, by using a ferrimagnetic recording medium with a compensation point between 40°C and a high Curie point it is possible to record and erase without using external magnetic bias by heating selected areas above the compensation point and below the Curie point. If a laser pulse is applied to heat a large enough area above the compensation point, the coercivity is lowered and the self-demagnetizing field of the medium forms a domain of reverse magnetic polarity as the area cools. If a smaller pulse is thereafter applied to the same area, a domain is created within the prior domain which expands and draws in the surrounding domain wall until the walls annihilate one another.

Even though the mechanism for erasing is significantly different from that used in Curie point erasing, applicants have discovered that the compensation point operation the laser erase pulses are smaller than the record pulses. From this discovery it becomes obvious that single-beam direct over-write operation is possible in a compensation point system, at least for single data spot operations.

A danger of domain growth exists in compensation point operations, however, where data is recorded on multiple passes in which successive "1"s are recorded without an intervening "0" (erase). The domain or data spot may grow due to slight misalignment on subsequent passes creating an enlarged domain that cannot be erased reliably. Also, there is a danger that successive erase pulses would have a cumulative effect and result in a recorded domain. Compensation point operation does not heat the area above the Curie point and therefore does not wipe out the prior magnetic history each time new data is recorded as is the case with Curie point operation. Applicants have discovered that if the cording medium is formulated to provide sufficient domain mobility and sufficient time elapses between successive record or erase operations, a domain will not grow upon application of subsequent record pulses, but instead will move, maintain the same size and realign on the last laser pulse. Also, under these conditions, erase pulses do not accumulate to form domains.

The invention is described further hereinafter, by way of example only, with reference to the accompanying drawings wherein:

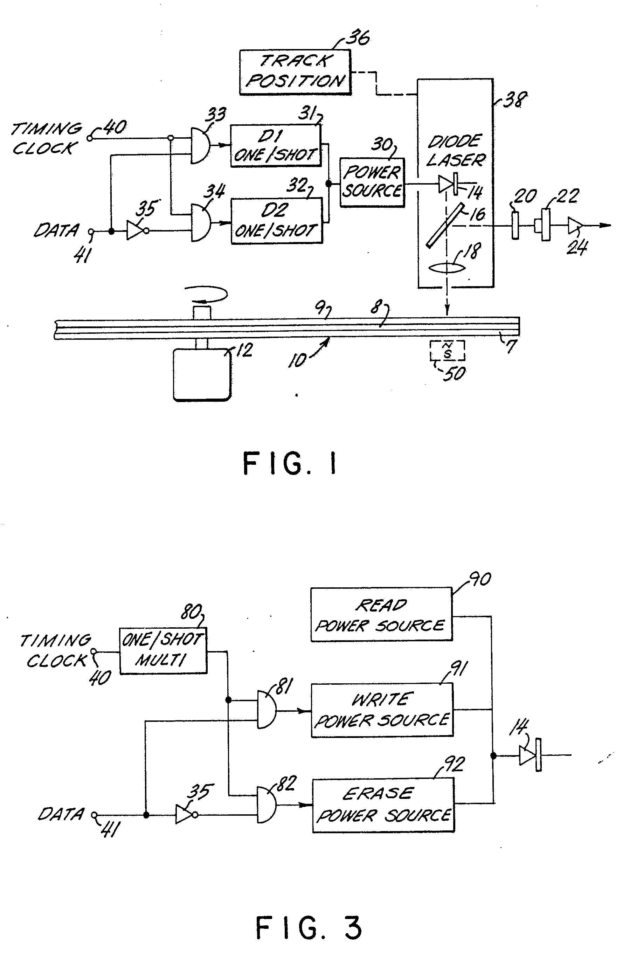

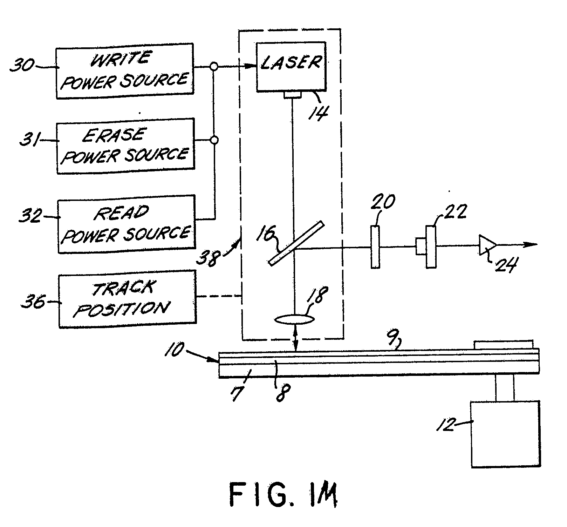

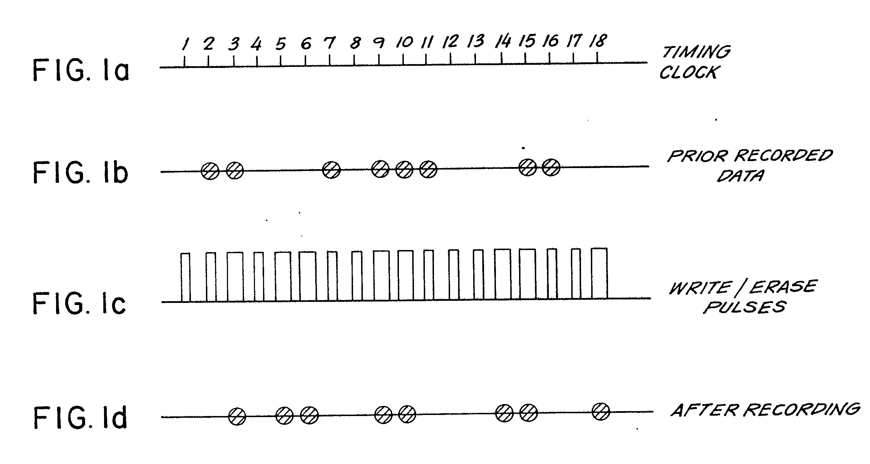

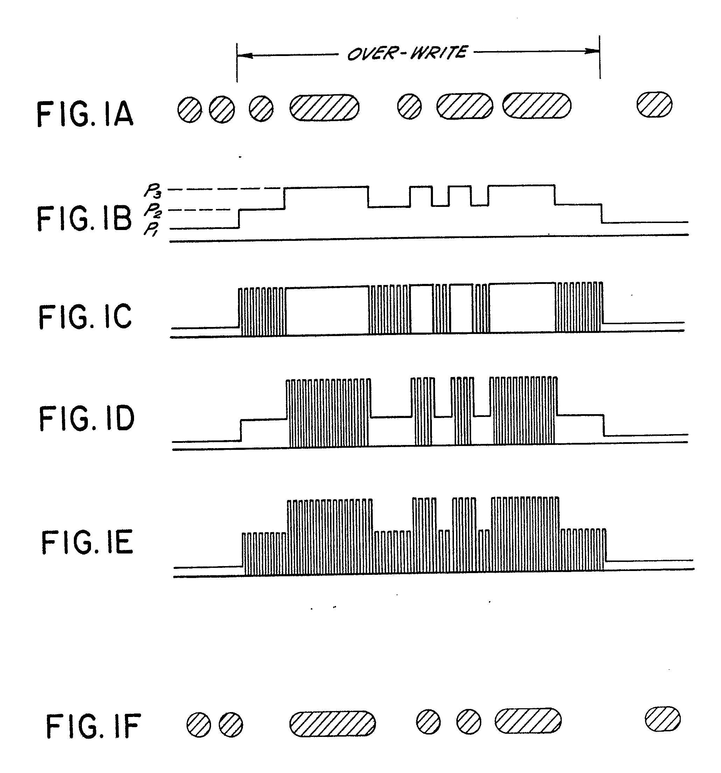

FIGS. 1 and 1M are diagrams illustrating a magneto-optic recording disk and the apparatus to erase and over-write digital data recorded on the disk;

FIGS. 1A-1F are a series of illustrations showing various methods of controlling the laser to achieve elongated domains and strip erasing;

FIGS. 1a - 1d are a series of illustrations showing specific method of controlling the laser to achieve direct over-write according to the invention;

FIGS. 2a - 2h are graphical representations of net magnetic moments of several adjacent data bit storage regions, at times before, during and after two successive changes in stored value;

FIG. 3 is a diagram illustrating an alternative apparatus to read, erase and over-write digital data recorded on the disk; and

FIGS. 3A - 3D are logic block diagrams illustrating control arrangements according to various methods according to the invention.

FIG. 4 is a perspective view of a magneto-optic recording disk and the apparatus to read and over-write digital data at a multiplicity of storage regions;

FIG. 4a is a section view through a recording disk;

FIG. 4b is a schematic block diagram of an electronic circuit for use, with the apparatus of FIG. 1, in over-writing the digital values stored in a particular storage region;

FIG. 5 is a perspective view of a magneto-optic recording disk and apparatus to read, erase and write digital data at a multiplicity of storage regions;

FIG. 6 is a schematic block diagram of an electronic circuit for use, with apparatus in Fig. 3, for selective erase-before-write operation; and

FIG. 7 is a schematic block diagram of an electronic circuit for use with apparatus in Fig. 3 for pulsed erase-before-write operation.

Figure 1 is a schematic illustration of the compensation point magneto-optic data storage system for writing and erasing spot domains of reverse magnetic polarity. The magneto-optic recording medium is on the surface of a disk 10 which is rotated by a suitable drive motor 12. A laser source 14 provides a polarized beam of laser energy directed toward the disk surface passing through a half-silvered mirror 16 and a lens 18. Light reflected from the disk surface passes through lens 18, is reflected off mirror 16, and then passes through a polarizer 20 to a photo detector 22 which in turn supplies a signal to an amplifier 24 indicating the amount of light received. Laser 14 and lens 18 make up a head unit 38 which can be selectively positioned at different distances from the center of disk 10 corresponding to different recording tracks by means of a track positioning mechanism 36.

Disk 10 includes a magneto-optic recording medium 8 placed on a substrate 7 by sputtering or like processes. The recording surface is overcoated with an optically-transparent protective layer 9 such as silicon oxide. Other suitable overcoat materials include silicon nitride, aluminum nitride, titanium oxide and zirconium oxide. The substrate is made of aluminum, glass (such as Corning glass types 0211 or 7059) or polycarbonate and glass substrates coated with photosensitive layers.

On the other hand, Figure 1M is a schematic illustration of the compensation point magneto-optic recording system for writing elongated domains and for strip erasing. The magneto-optic recording medium is on the surface of a disk 10 which is rotated by a suitable drive motor 12. A laser source 14 provides a polarized beam of laser energy directed toward the disk surface passing through a half-silvered mirror 16 and a lens 18. Light reflected from the disk surface passes through lens 18, is reflected off mirror 16, and then passes through a polarizer 20 to a photo detector 22 which in turn supplies a signal to an amplifier 24 indicating the amount of light received. Laser 14, mirror 16 and lens 18 make up a head unit 38 which can be selectively positioned at different distances from the center of disk 10 corresponding to different recording tracks by means of a track positioning mechanism 36.

Disk 10 includes a magneto-optic recording medium 8 placed on a substrate 7 by sputtering or like processes. The recording surface is overcoated with an optically-transparent protective layer 9 such as silicon oxide. Other suitable overcoat materials include silicon nitrite, aluminum nitride, titanium oxide and zirconium oxide. The substrate is made of aluminum, glass (such as Corning glass types 0211 or 7059) or polycarbonate and glass substrates coated with photo-polymer layers.

The recording layer is fabricated of a ferrimagnetic magneto-optic material, such as an alloy of gadolinium terbium cobalt (GdTbCo), terbium cobalt (TbCo), terbium iron cobalt (TbFeCo), gadolinium terbium iron cobalt (GdTbFeCo) and the like, which has a compensation temperature $T_c$ preferably higher than the highest expected ambient temperature $T_a$, but much less than the crystallization temperature of the alloy (above 300°C). Compensation temperatures should be at least a few tens of degrees C. above the normal room temperature. Experimental work has established that magnetic domains of ferrimagnetic materials can be erased without magnetic bias according to the compensation point technique of this invention in materials with a compensation temperature in the range of 40° to 140°C. Erasure, although possible, does not work reliably outside this range. The preferred range of compensation temperatures is 60° to 100°C. The Curie temperature should be at least 150°C and at least 50°C above the compensation point and preferably at least 100°C above the compensation point. In-plane hysteresis, which may be caused by oxidation, should be avoided.

In general it is known that the compensation temperature of a ferrimagnetic recording medium is a function of the ratio of the two types of magnetic materials. In rare earth, transition metal, magneto-optic formulations, the compensation temperature is a function of the rare earth to transition metal ratio. If more than one rare earth is included in the formulation, the compensation temperature is approximately independent of the ratio of the rare earths. In formulations including iron, such as gadolinium terbium iron cobalt (GdTbFeCo), the compensation temperature is approximately independent of the iron/cobalt (Fe/Co) ratio. In formulations in which cobalt is the transition metal, about 77% cobalt yields a compensation temperature of 50°C., whereas about 75.8% cobalt yields a compensation temperature of 100°C.

Good domain mobility is required in the recording medium so that, with multiple pass recording of a particular spot, the domain will realign and not grow. Ferrimagnetic alloys including light rare earths such as gadolinium usually provide good mobility but generally require an approximately equal proportion of a heavy rare earth like terbium to increase coercivity to an effective operating level.

Preferred formulations (in atomic %) tested in the laboratory are as follows:

(1) $Tb_{25} Fe_{55} Co_{20}$ having a compensation temperature of 80°C, a Curie temperature of 330°C, and a coercivity $H_c$ of 4 kilo-oersteds at 27°C.

(2) $Gd_{13} Tb_{13} Fe_{59} Co_{15}$ having a compensation temperature of 90°, a Curie temperature of 330°C and a coercivity $H_c$ of 2.5 kilo-oersteds at 27°C.

(3) $Tb_{19.5} Co_{80.5}$ having a compensation temperature of 120°C, a Curie temperature over 400° and a coercivity $H_c$ of 1.8 kilo-oersteds at 27°C.

Growth of a domain is likely to occur when successive areas overlap while heated above the compensation point. Successive erase pulses which overlap above the compensation temperature can create a new domain. It is essential therefore that the medium rapidly cool below the compensation point to avoid such overlap on successive operations or successive passes recording or erasing the same spot. Thin film coatings of the recording medium on the order of 100 nanometers normally cool to room temperature in considerably less time than required for multiple passes.

After fabrication, the disk is subjected to a saturating magnetic field of about 20 k-Oersteds to provide an initial magnetic state. Upon cooling, under the influence of the external field, the region assumes a net magnetic moment directed in the same direction as the bias field.

As shown in FIG. 1, laser 14 is energized by a power source 30. For lower cost units operating at low to moderate disk speeds, semiconductor diode lasers, such as the SHARP LT 024MDD diode laser which operates at 782 mm wavelength and up to 20 milliwatts power, are preferred. Another suitable diode laser is HLP 1400 operating at 820 mm wavelength available from Hitachi. For systems requiring more power for operating at higher disk velocities, an argon gas laser can be used.

With a diode laser, energization for an interval of 10 nanoseconds to 1 microsecond with power levels on the order of 1-20 milliwatts is used to affect the magnetic state of the recording medium during "write" and "erase" operations, whereas a lower power level which does not alter the magnetic state of the medium is used for "read" operations. Nucleating micrometer size spot domains in a gadolinium terbium cobalt (GdTbCo) film, for example, can be achieved by locally heating the film with seven milliwatts of laser power for a 300 nanosecond pulse duration without an externally applied magnetic field. A spot domain written with a pulse of 300 nanoseconds duration can be completely erased by a succeeding pulse of 100-200 nanoseconds duration at the same power level. With 12 milliwatts of laser power, a spot domain written with a 100 nanosecond pulse can be erased by a 30-80 nanosecond pulse; a spot domain written with a 150 nanosecond pulse can be erased with a 35-130 nanosecond pulse; and a spot domain written with a 200 nanosecond pulse can be erased with a 45-175 nanosecond pulse. A one-shot multivibrator 31 is connected to power source 30 and set to produce a pulse of duration $D_1$ corresponding to the longer "write" pulse, and a one-short multivibrator 32 is connected to power source 30 and set to produce a pulse of duration $D_2$ corresponding to the shorter "erase" pulse.

Lens 18 should be configured to focus the beam, at the half power diameter thereof, to an area having a diameter somewhat less than the diameter of the region to be heated. In both writing and erasing in accordance with this invention, the object in selecting the laser pulse power is to heat an area above the compensation point without significant heating above the Curie temperature. Thus, localized heating raises the temperature above the compensation point, and causes a localized decrease in the coercivity, of substantially only a limited region into which data is to be written.

The data written on a track of disk 10 can be non-destructively read therefrom by causing a reading light beam of linear-polarized light from laser 14, energized by a low level power source (not shown in FIG. 1) of amplitude insufficient to heat an area to a temperature high enough that the magnetization changes, to be projected toward the disk surface. In the reflected beam, polarization is rotated in a direction dependent upon the direction of the net magnetic moment. The polarization of the reflected beam can therefore be analyzed to determine the binary state of the data stored in the region being read.

On the other hand, as shown in FIG. 1M, laser 14 is energized by one of three power sources 30-32, or alternatively by a single source at different selected levels or different duty cycles. For lower cost units operating at low to moderate disk speeds, semiconductor diode lasers, such as the SHARP LT 024MDD diode laser which operates at 782 mm wavelength and up to 20 milliwatts power, are preferred. Another suitable diode laser is HLP 1400 operating at 820 mm wavelength available from Hitachi. For systems requiring more power for operating at higher disk velocities, an argon gas laser can be used. With a diode laser, energization for an interval of 10 nanoseconds to 1 microsecond with power levels on the order of 1-20 milliwatts is used to affect the magnetic state of the recording medium during "write" and "erase" operations, whereas a lower power level which does not alter the magnetic state of the medium is used for "read" operations. Nucleating micrometer size spot domains in a gadolinium terbium cobalt (GdTbCo) film, for example, is achieved by locally heating the film using write power source 30 with seven milliwatts of laser power for a 300 nanosecond pulse duration without an externally applied magnetic field. A spot domain written with a pulse of 300 nanoseconds duration can be completely erased by a succeeding pulse of 100-200 nanoseconds duration at the same power level from erase power source 31. With 12 milliwatts of laser power, a spot domain written with a 100 nanosecond pulse can be erased by a 30-80 nanosecond pulse; a spot domain written with a 150 nanosecond pulse can be erased With a 35-130 nanosecond pulse; and a spot domain written with a 200 nanosecond pulse can be erased with a 45-175 nanosecond pulse.

Lens 18 should be configured to focus the beam, at the half power diameter thereof, to an area having a diameter somewhat less than the diameter of the region to be heated. In both writing and erasing in accordance with this invention, the object in selecting the laser pulse power is to heat an area above the Curie temperature. Thus, localized heating raises the temperature above the compensation point, and causes a localized decrease in the coercivity, of substantially only a limited region into which data is to be written.

The data written on a track of disk 10 can, as mentioned above, be non-destructively read therefrom by causing a reading light beam of linearly-polarized light from laser 14, energized by read power source 32 (of amplitude insufficient to heat an area to a temperature high enough that the magnetization changes), to be projected toward the disk surface. In the reflected beam, polarization is rotated in a direction dependent upon the direction of the net magnetic moment. The polarization of the reflected beam can therefore be analyzed to determine the binary state of the data stored in the region being read.

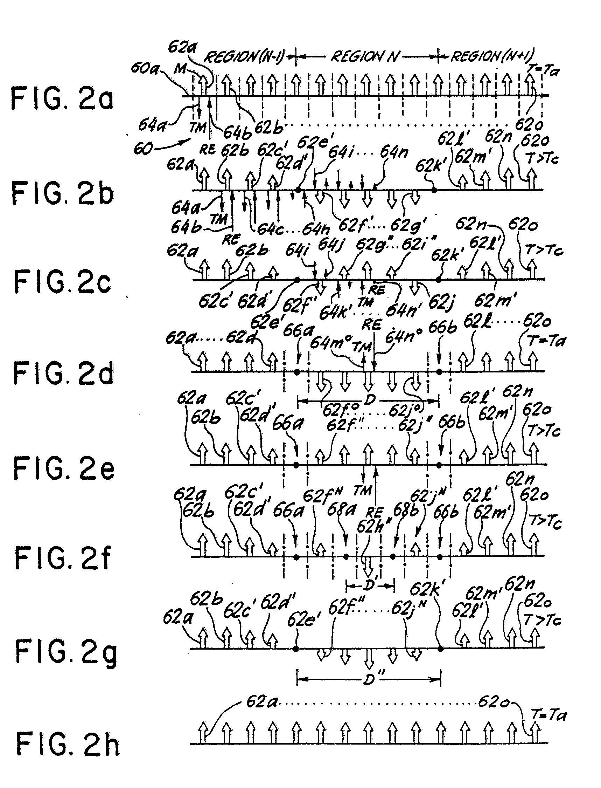

The present invention facilitates spot domain recording and erasing, as well as elongated domain recording and strip erasing, of previously written information in selected regions of the magneto-optic medium. The method employs the self demagnetizing field created within a reheated region by the specially formulated thin film magneto-optic recording medium (with a compensation temperature in the range of 40° to 140°C and a Curie point temperature at least 50°C above the compensation temperature) to reverse the net magnetization of the region and thus eliminate the requirement for an externally applied bias magnetic filed. The physical processes believed to be involved will be described hereinafter in conjunction with Figures 2a-2h. In general, when a sufficiently large region is heated above the compensation point to lower the coercivity of the region, the demagnetizing field creates a stable domain of reverse magnetic polarity when the region cools. To erase a previously recorded domain, a lower energy laser beam is used to create a domain within the prior domain. The new domain expands and draws in the surrounding domain wall until the domain walls annihilate one another, thereby erasing the domains

Surprisingly, it has been found that this compensation point technique is capable of strip erasing, i.e., capable of reliably erasing all magnetic domains in the path of the laser beam regardless of prior magnetic history. The laser beam must be operated at a medium power level not sufficient to create a stable domain, but sufficient to create a domain which will expand to annihilate previously recorded domains. The laser can be operated continuously at the medium power level or can be energized to produce closely spaced laser pulses. It has also been found that the compensation point technique is capable of recording elongated strip domains. These elongated strip domains can be achieved by continuously operating the laser at a higher power level or by using closely spaced pulses at the higher power level. Strip erasing has the advantage of erasing any domain in the path of the beam, and in effect recording a "0" state, regardless of prior magnetic history and without requiring accurate positioning relative to the prior domains being erased. Strip erasing in combination with strip recording of elongated domains permits the use of pulse-width-modulated or run-length-limited, coded recording techniques which significantly increase the data density that can be recorded along a track.

A glass disk of 130 mm diameter and 1.2 mm thickness was coated (100 nanometers) With a Gd Tb Fe Co formulation with a target compensation temperature in the range of 60° - 120°C. Tests were conducted using the compensation point technique on tracks located at 45 - 50 mm from the center which had a track speed of about 3 meter/sec. A SHARP semiconductor laser operating at 782 nm wavelength was energized continuously at 5.5 milliwatts for strip erasing and was energized continuously at 8.0 milliwatts for the duration of elongated strip domain recording. Strip erasing was also achieved using 8.0 milliwatt peak laser power at 5-6 megahertz using a 50% duty cycle. Generally, the preferred laser power level increases with increases in the compensation temperature of the recording medium and increases with increases in the thickness of the recording medium. The preferred power level also increases with increases in the linear speed.

For strip erasing using pulsed energization of the laser, the laser pulses should be spaced at less than one half the minimum anticipated domain diameter (or domain width). With this spacing the laser produces at least two erase pulses while any recorded domain passes the erase station. By pulsing the laser in this manner at the medium erase power level, any domains along the path, whether discrete or elongated, are erased. A similar spacing should be used when recording elongated strip domains using a pulsed laser. With such a close spacing of pulses, the individual domains being formed coalesce into an elongated strip domain as long as laser pulses are applied sufficiently close in time to create a progressive heated area.

Four methods of using the strip erase and recording technique according to the invention are illustrated in Figs. 1A - 1F. Assume that data recorded along a track is as shown in Fig. 1A wherein the magnetic state is normally in the "0" state and the shaded areas represent recorded domains of opposite magnetic polarity in the "1" state. Further assume that it is desired to overwrite a portion of the track as indicated so that the recorded data appears as indicated in Fig. 1F.

One method for changing the data employs continuous energization of the laser as shown in Fig. 1B. Where overwrite is not desired, the laser is energized at a low power level used for reading data where the power level is insufficient to affect the recorded data. During the overwrite segment the laser is operated either at the medium power level $P_2$ for erasing or at the higher power level $P_3$ for writing. Whenever the laser operates at power level $P_2$, the medium is erased to record a "0" state; and whenever the laser operates at the higher power level $P_3$, the domain of reverse polarity is recorded for the "1" state.

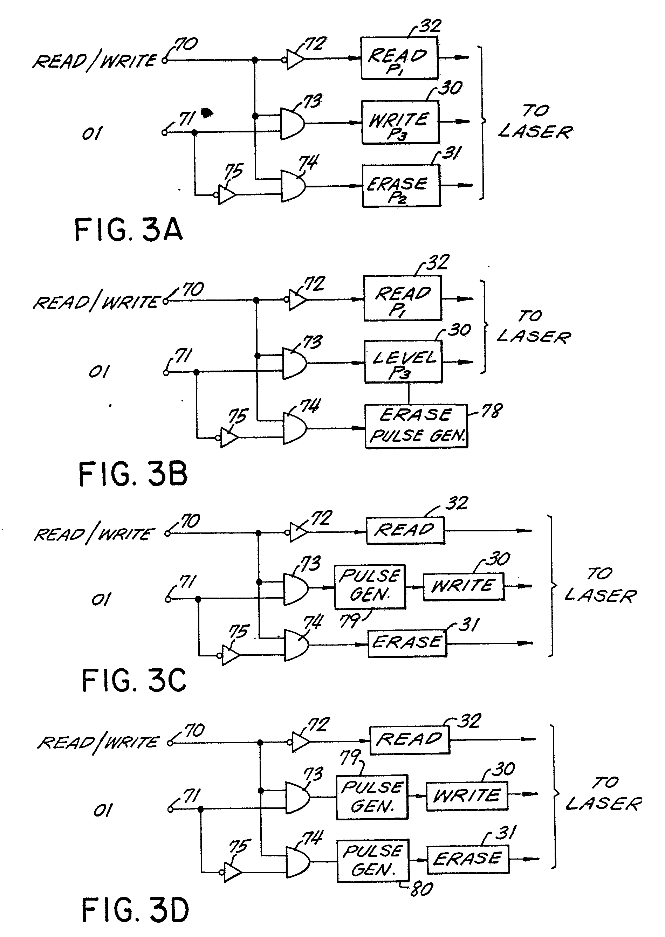

Operation according to the method illustrated in Fig. 1B can be achieved using logic control circuits illustrated schematically in Fig. 3A. A terminal 70 receives the "read/write" control signal with the zero level corresponding to "read" and the high level corresponding to "write". A terminal 71 receives that data control with the zero level corresponding to "0" and the high level corresponding to "1". Terminal 70 is connected to read power source 32 via an inverter 72 and is connected to write power source 30 and erase power source 31 via AND gates 73 and 74, respectively. Terminal 71 is coupled to write power source 30 via AND gate 73 AND gate 74. A "read" signal (zero level at terminal 70) produces a high signal at the output of inverter 72 to activate read power source 32 to energize the laser at a low level $P_1$. A "write" signal at terminal 70, on the other hand, condition AND gates 73 and 74 to pass through the data information from terminal 71. If a high signal is present at terminal 71 (corresponding to a "1"), this signal passes through AND gate 73 to activate write power source 30 to energize the laser at the high power level $P_3$. If a zero level signal is present at terminal 71 (corresponding to a "0"), inverter 75 produces a signal that passes through AND gate 74 to activate erase power source 31 to energize the laser at the medium power level. Another method for overwriting the data is illustrated in Fig. 1E wherein laser pulses are used during the overwrite operation. Pulses at the medium power level are used to erase and record the "0" state whereas pulses at the higher power level are used to record discrete elongated domains indicating the "1" state. The two power levels can be achieved by using pulses of two different power levels using the same frequency and duty cycle as shown. Alternatively, a constant peak power level can be employed and the duty cycle varied to change the power level.

Operation according to Fig. 1E may be achieved using control circuits as illustrated schematically in Fig. 3B. Instead of connecting the outputs of AND gates 73 and 74 to power sources 30 and 31 as was the case in Fig. 3A, AND gate 73 is coupled to power source 30 via a pulse generator 79, and AND gate 74 is coupled to power source 31 via a pulse generator 80. The pulse repetition rate for the pulse generators must be sufficiently high to achieve overlap of successive heated areas above the compensation temperature in the recording medium, on the order of at least 5 megahertz and preferably higher. The power level of sources 30 and 31 should be adjusted according to the duty cycle of the pulse generators.

Other methods for overwriting the data, which are hybrids of the above methods, are illustrated in Figs 1C and 1D. In Figure 1C erasing is achieved by pulsing the laser, and writing is achieved by continuous laser excitation. The laser operates at the same peak power for the erase and write operation with the lower power level for the erase operation being achieved by appropriate adjustment of the duty cycle. In Figure 1D, the laser is continuously energized at the medium level for the erase operation and is pulsed at a higher power level for the write operation.

Operation according to the methods according to Figures 1C and 1D may be achieved using control circuits as illustrated in Figures 3B and 3C, respectively. In Fig. 3C a pulse generator is coupled between AND gate 73 and the write power source 30. In Fig. 3B an erase pulse generator 78 is connected to the output of AND gate 74, and the erase pulse generator 78 is connected to activate the same power source 30 used for the "write" operations. The erase pulse generator should have a duty cycle of about 50% to reduce the laser power level to the medium range suitable for erase operations.

Control circuits suitable for achieving direct over-write operation according to the invention are illustrated in Fig. 1. Timing clock pulses, such as are conventionally derived from a timing track on the disk, are applied to a terminal 40 whereas binary data to be recorded is supplied to a terminal 41. Data terminal 40 is directly connected to one input of an AND gate 33 and is connected to one input of an AND gate 34 via an inverter 35. Terminal 40 is connected to the other inputs of AND gates 33 and 34. The outputs of AND gates 33 and 34 are connected to one-shot circuits 31 and 32, respectively.

The direct over-write method of operation according to the invention is illustrated in FIGS. 1a-1d. A sequence of eighteen timing pulses is shown in FIG. 1a designating the positions of the data spot locations along a data track on the disk. Assume that data has previously been recorded as shown in FIG. 1b wherein domains of reverse magnetic polarity appear at locations 2, 3, 7, 9, 10, 11, 15 and 16. If on a subsequent pass, the laser is energized with the larger write pulse from one-shot 31 at locations 3, 4, 6, 7, 10, 14, 15 and 18, as shown in FIG. 1c, domains of reverse polarity are recorded as indicated by the shaded areas appear at corresponding locations on the track as shown in FIG. 1d. Short erase pulses from one-shot 32 at locations 1, 2, 4, 7, 8, 11, 12, 13, 16, and 17 erase any domains that may have previously been recorded at these locations.

As can be seen, application of a higher energy "write" pulse results in a domain of reverse magnetic polarity which can correspond to a "1" state regardless of the prior magnetic history at the data location. Likewise, application of a lower energy "erase" pulse results in a "0" state regardless of prior magnetic history. That is, any existing domain is erased and if no domain exists, none is formed. Thus, the data pattern can be directly controlled by a single beam pass according to the pattern of "write" and "erase" pulses.

With a recording media including gadolinium to provide domain mobility and terbium to increase coercivity (GdTbFeCo) and a film thickness on the order of 100 nanometers, re-recording a data spot 1000 times did not result in any noticeable growth of the domain. Also, multiple erase pulses do not result in a recorded domain with such a medium.

In some instances re-recording domains can lessen the contrast indicating some porosity in the domain. The problem can be eliminated by placing a small permanent magnet 50 (FIG. 1) beneath the film with the field in such a direction as to enhance the recording process without affecting the erase process (i.e. in opposition to the pre-magnetized state). Such use of a non-reversible magnetic field does not adversely affect the operating speed as would be the case with an external reversible field.

Laser pulses at different energy levels for the "write" and "erase" operations can be achieved using different power levels with the same pulse duration. With a GdTbFeCo medium, a domain written with an 800 nanosecond laser pulse at 8.3 milliwatts (0.5 micrometer domain size) can be erased with a laser pulse of the same duration at a power level of 2.6-7.3 milliwatts (about 0.7 micrometer domain size) can be erased at a power level of 6.8 - 9.2 milliwatts at the same duration.

A domain of a 1.0 micrometer size recorded using a 1000 nanosecond pulse at 7.9 milliwatts can be erased with a pulse at 2.4 - 6.9 milliwatts at the same duration. A domain of a 1.2 micrometer size can be recorded using a 1000 nanosecond pulse at 10.5 milliwatts and can be erased using pulses at 3.3 - 7.4 milliwatts at the same duration.

Alternative apparatus for achieving high energy "write" pulses and lower energy "erase" pulses is illustrated in FIG. 3 wherein the light pulses produced by laser 14 are of the same duration, but at a higher power level for "write" operations and at a medium power level for "erase" operations. The timing pulses at terminal 40 are supplied to a one-shot multivibrator 80 which in turn supplies pulses of controlled duration to AND gates 81 and 82. Data terminal 41 is directly connected to the other input of AND gate 81 and is connected to the other input of AND gate 82 via an inverter 35. The output of AND gate 81 activates a write power source 91 which in turn energizes diode laser 14 at the higher power level when activated. The output of AND gate 82 activates power source 92 which in turn energizes diode laser 14 at the medium power level when activated. A read power source 90 is connected to diode laser 14 to energize the laser at a power level below that which can affect the state of the magnetic recording medium.

Critical to the write operation according to the invention is to supply sufficient energy to heat an area above the compensation temperature large enough to reduce the coercivity, and create a domain of reverse magnetic polarity upon cooling. Critical to the erase operation according to the invention is to supply a moderate amount of energy sufficient to create a domain which can grow and annihilate any surrounding domains but not sufficient to create a stable domain upon cooling. The energy for the write and erase operations can be by means of laser pulses of the same power level at different pulse durations (FIG. 1) or by means of pulses of the same duration at different power levels (FIG > 3). The energy can also be supplied using multiple pulses sufficiently closely spaced to create overlapping areas heated above the compensation temperature.

The process that appears to be physically occurring for the self-inverting data over-write method (using the apparent self-demagnetizing field of the thin-film magneto-optic recording media) is illustrated in FIGS. 2a -2h. Prior to the time at which a first over-write operation is to occur, the media layer 60 is at an ambient temperature Ta less than the compensation temperature Tc of the magneto-optic material. The recording regions each contain one bit of a first set of data. FIG. 2a illustrates that, for the starting data set with the same data value, e.g., a binary one state, in each of three sequential regions (N - 1), N, and (N + 1), the net magnetic moments (symbolized by the broad arrows 62a-62o) are all directed in the same (e.g., upward) direction substantially perpendicular to the media layer surface 60a and are all of approximately the same amplitude. The amplitude and direction of the net magnetic moment M is established by the relative amplitudes and direction of the magnetic moment of the individual components of the magneto-optic alloy. Here, the downwardly-directed moment 64a of the transition metal (TM) component of the alloy is of smaller amplitude than the upwardly-directed moment 64b of the rare earth (RE) alloy component, in each subregion.

As a region N receives energy from the overwriting means (laser 18, Fig. 1), the temperature of that region is raised until the compensation temperature Tc is exceeded. Because the impingent light beam 15 has a substantially Gaussian energy distribution, the entire region N is not uniformly heated. Thus, while the individual alloy component magnetic moments (e.g., moments 62a and 62b) and the net magnetic moments (e.g., net moments 62a, 62b, 62n and 62o) all remain substantially unchanged in subregions removed from the region N receiving energy, those subregions nearer to the heated region N receive energy from the fringes of the beam. Responsive to the increased temperature, which is less than the compensation temperature in these other regions (N-1), (N + 1), etc., the magnetic moment 64c of the transition metal TM component is decreased by some amount, which is not as great as the decrease in the magnetic moment 64d of the rare earth RE component; the net moment (e.g., net moments 65c' and 64m') of that subregion is reduced. As the temperature increases, the reduction in the magnitude of the net magnetic moment (e.g., net moments 64d' and 641') continues, responsive to the faster reduction of the RE moment 64f than the reduction in the TM moment 64e, with closer location to region N. In some subregions the compensation temperature is just attained and the reduced amplitudes of the TM and Re moments 64g and 64h become by definition, equal; the net magnetic moment 62e', 62k',... are of zero magnitude (and define the periphery of the region N). Inward of the regions 62 with zero net magnetic moment, the subregion temperature exceeds the compensation temperature; the reduced amplitude of the TM moment (e.g., magnetic moments 64i, 64k, 64m...) is now larger than the reduced amplitude of the RE moment (e.g., magnetic moments 64j, 64l, 64m, 62f-62j'...) are all now reserved, having increasing magnitude but in the opposite direction (e.g., into the recording layer).

The self-demagnetizing field in opposition to the magnetization in the center region of FIG. 2b causes the component moment directions to reverse as shown in FIG. 2c. The component moments in subregions within, but adjacent to, the region N periphery remain fixed in the former direction (e.g., as shown by moments 64i and 64j) so that the net moment remains fixed in the new (now inverted) direction. The component moments in the more central subregions, however, are direction reversed to the original direction (e.g., the upward direction, as at net magnetic moments 62g″, 62h″, 62i″,...). As the subregion temperature decreases upon cooling, after removal/off-switching of the light beam, the amplitudes of the alloy component magnetic moments increase to their ambient temperature values; as each subregion passes through the compensation temperature, the net magnetic moment 62 thereof is decreased to zero. As shown in FIG. 2d, in each subregion, at some temperature less than the compensation temperature, the RE magnetic moment (e.g., magnetic moment 64n°) amplitude is again greater than the amplitude of the TM magnetic moment (e.g., magnetic moment 64m°) and the direction of the net moment (e.g., net magnetic moment 62h°) is again in the same inverted direction. The rest of the region N subregions experience the same inversion of their net magnetic moments (e.g., net magnetic moments 62g°, 62i°...). Thus, the subregions of region N all have net magnetic moments aligned in a direction opposite to the alignment direction prior to the heating of the region N to a temperature greater than the compensation temperature. As the opposed moments nucleate a magnetic wall (as at the periphery subregions 66a and 66b upon opposite sides of region N), a stable magnetic domain is created, with diameter D, now storing the new value of the associated data bit.

On the other hand, referring to the alternative embodiment shown in FIG> IM, a region N receives energy from the overwriting means (laser 14), the temperature of that region is raised until the compensation temperature Tc is exceeded as shown in FIG. 2b. Because the impingent light beam 15 has a substantially Gaussian energy distribution, the entire region N is not uniformly heated. Thus, while the individual alloy component magnetic moments (e.g., moments 64a and 64b) and the net magnetic moments (e.g., net moments 62a, 62b, 62n and 62o) all remain substantially unchanged in subregions removed from the region N receiving energy, those subregions nearer to the heated region N receive energy from the fringes of the beam. Responsive to the increased temperature, which is less than the compensation temperature in these other regions (N-1), (N+1), etc., the magnetic moment 64c of the transition metal TM component is decreased by some amount, which is not as great as the decrease in the magnetic moment 64d of the rare earth RE component; the net moment (e.g., net moments 62c′ and 62m′) of that subregion is reduced. As the temperature increases, the reduction in the magnitude of the net magnetic moment (e.g., net moments 62d′ and 62l′) continues, responsive to the faster reduction of the RE moment 64f than the reduction in the TM moment 64e, with closer location to region N. In some subregions the compensation temperature is just attained and the reduced amplitudes of the TM and RE moments 64g and 64h become by definition, equal; the net magnetic moment 62e′, 62k′,... are of zero magnitude (and define the periphery of the region N). Inward of the regions 62 with zero net magnetic moment, the subregion temperature exceeds the compensation temperature; the reduced amplitude of the TM moment (e.g., magnetic moments 64i, 64k, 64m...) is now larger than the reduced amplitude of the RE moment (e.g., magnetic moments 64j, 64l, 64m, 62f-62j′...) are all now reversed, having increasing magnitude but in the opposite direction (e.g., into the recording layer).

The self-demagnetizing field is opposite the magnetization in the center region of FIG. 2b causing the component moment directions to reverse as shown in FIG> 2c. The component moments in subregions within, but adjacent to, the region N periphery remain fixed in the former direction (e.g., as shown by moments 62i and 62j) so that the net moment remains fixed in the new (now inverted) direction. The component moments in the more central subregions, however, are direction reversed to the original direction (e.g., the upward direction, as at net magnetic moments 62g″, 62h″, 62i″,...). As the subregion temperature decreases upon cooling, after removal/off-switching of the light beam, the amplitudes of the alloy component magnetic moments increase to their ambient temperature values; as each subregion passes through the compensation temperature, the net magnetic moment 62 thereof is decreased to zero. As shown in FIG. 2d, in each subregion, at some temperature less than the compensation temperature, the RE magnetic moment (e.g., magnetic moment 64n°) amplitude is again greater than the amplitude of the TM magnetic moment (e.g., magnetic moment 64m°) and the direction of the net moment (e.g., net magnetic moment 62h°) is again in the same inverted direction. The rest of the region N subregions experience the same inversion of their net magnetic moments (e.g., net magnetic moments 62g°, 62i°...). Thus, the subregions of region N all have net magnetic moments aligned in a direction opposite to the alignment direction prior to the heating of the region N to a temperature greater than the compensation temperature. As the opposed moments nucleate a magnetic wall (as at the periphery subregions 66a and 66b upon opposite sides of region N), a stable magnetic domain is created, the diameter D, now storing the new value of the associated data bit.

Referring now to FIGS. 2e-2h, at some later time, a comparison of the data value (e.g., a logic zero) stored in the domain and the logic value (e.g., a logic one) of a new bit of binary data for storage in domain N indicates that the region N must be over-written. This decision enables the write laser diode and causes region N to be again heated, in the absence of any substantial intentional external bias magnetic field, to a temperature in excess of the compensation temperature. The domain wall, as exemplified by wall portions 66a and 66b of FIG. 2e is not abruptly destroyed; there is an inversion of the net magnetic moments 62 of the subregions within region N, due to the reversal of the alloy component magnetic moment dominance. Thus, the net magnetic moments 62f'-62j' and 62f''-62j'', of those subregions within the heated region N, are not only modified in amplitude by the Gaussian energy distribution of the impinging light beam, but are also inverted in direction, to point upwardly and away from the magneto-optic material layer. The self-demagnetizing field of the immediately-adjacent subregions (i.e., the upwardly directed net moments of the subregions 62f' and 62j'') cause a reversal in the local magnetic field in the center subregion(s), as here represented by subregion 62h'', of the heated region N, as shown in FIG. 2f, so that at least one of the interior subregions now has the net magnetic moment thereof directed in an again-inverted direction (e.g., the downwardly-directed net magnetic moment 62h'' of a smaller, region of diameter D', less than region/domain diameter D, within the larger domain/region N). A second, inner domain wall, as shown by opposed wall portions 68a and 68b, is now present abut the subregion periphery. Local wall motion causes the portions of the inner wall to expand to the locations of the associated portions of the outer wall; the two walls meet and mutually annihilate one another, so that the diameter D'', of the region in which the net magnetic moments 62g''-62i'' (see FIG. 2g) are still inverted, is greater than the domain diameter D'. As the temperature of the region N is decreased to below the compensation temperature, by cooling as cessation of the heating pulse, the relative amplitudes of the RE and TM alloy component magnetic moments change and the subregion net magnetic moments are again all directed in the same direction (e.g., the upward direction for net magnetic moments 62e-62k, of FIG. 2h). The data value stored in region N has, therefore, been inverted (e.g., to a logic one value) from the state of the data value (e.g., the logic zero value) previously stored in that region.

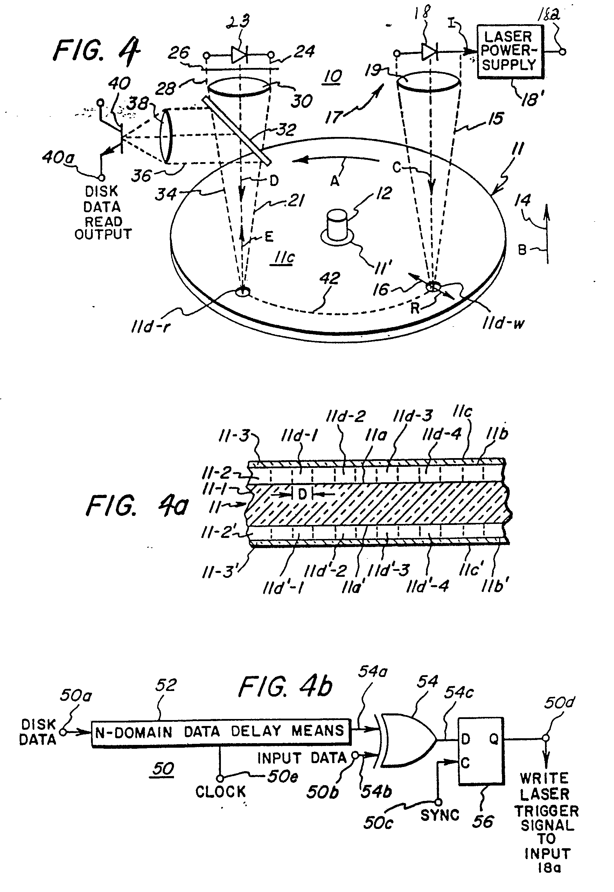

Now, referring to FIGS. 4 through 7, in order to describe additional detailed embodiments of apparatus used in practicing this invention, references made initially to FIGS. 4 and 4a, where apparatus 10, for a magneto-optic storage of digital information, includes a storage disk 11, which may be of cylindrical shape. The disk has a central aperture 11', through which a central spindle member 12 protrudes during operation; the disk is caused to rotate about spindle 12, in the direction of arrow A, by known mechanisms (not shown). The disk 11 is itself comprised of a discoidal substrate member 11-1, formed of a substantially non-magnetic material, such as glass and the like. The substrate has a pair of circular, substantially parallel and spaced apart surfaces 11a and 11a', upon at least one (and preferably both) of which surfaces a thin film 11-2 or 11-2' of the magneto-optic recording material is fabricated, as by sputtering and the like processes. The outwardly-directed circular surfaces(s) 11b (and 11b', if second layer 11-2' is present) of the recording thin film layer(s) is preferably overcoated with an optically--transparent protective layer 11-3 (or 11-3') of glass and the like. Each recording layer 11-2 or 11-2' is characterized by a multiplicity of microscopic data storage regions lid, e.g., the consecutive storage regions 11d-1 through 11d-4 defined through the upper recording layer 11-2, and the consecutive storage regions 11d'-1 through 11d'4 defined through the lower recording layer 11-2'. Each recording region has an average diameter D, on the order of 1 micron. Each recording layer is fabricated of a magneto-optic material, such as an alloy of gadolinium terbium cobalt (GdTbCo), terbium cobalt (TbCo), gadolinium iron cobalt (GdFeCo) and the like, which has a compensation temperature $T_c$ higher than the highest expected ambient temperature $T_a$, but much less than the crystallization temperature of the alloy. Compensation temperatures only a few tens of degrees C. above the normal room temperature are preferred.

The crystallization temperature for alloys of gadolinium terbium cobalt (GdTbCo) and terbium cobalt (TbCo) is abut 250°C. and, therefore, the compensation temperature should be below 200°C. and preferably below 140°C to avoid any crystallization of the recording medium.

A few tens of degrees C. above normal room temperature sets the minimum compensation temperature Tc for this invention at 40°C. Since disk drives are commonly designed for operation up to 55°C ambient, a compensation temperature above 60°C. is preferable.

Experimental work has established that magnetic domains in ferrimagnetic materials can be erased without magnetic bias in materials with a compensation temperature in the range of 40°C to 140°C. Erasure, although possible, does not work reliably outside this range.

A preferred target compensation temperature for the recording medium according to the invention is 80°C. The preferred range of actual compensation temperatures about the target temperature is 60°C to 100°C, as previously mentioned.

The binary value of the data bit stored in any one region 11d is initially random, immediately following fabrication of disk 11. Each region is heated to a temperature greater than the compensation temperature $T_c$ while an external bias magnetic field 14, established in a direction (e.g., upwardly, as shown by arrow B) substantially perpendicular to the plane of the disk surface, is caused to pass through the heated region upon cooling, under the influence of the external field 14, each region has a net magnetic moment directed in the same direction, e.g., upward, as the direction of the initializing bias field 14. This initial magnetic moment direction can be assigned to either binary value, so long as that direction:value assignment is consistently utilized. It should be understood that run-length-limited codings could be used and that each domain could contain more than a single bit of data.

While large amounts of data may be substantially simultaneously written into the initialized memory regions, for the purpose of illustration, a single beam 15 of heating radiation is considered radially movable along a line 16 so as to be directed to fall at a presently-selected one of a plurality of points presently each defining a selected one of concentric circular tracks of sequentially-located regions 11d-w (although a spiral track can be used); one bit of digital data is to be initially written into each of regions 11d-w. The beam can be formed of optical radiation, as produced by a light source means 17, such as a laser diode 18 and a focusing lens means 19, and will be directed toward the disk, a shown by arrow C. The laser diode produces its optical radiation output responsive to a current I caused to flow therethrough, from an associated laser power supply 18', responsive to reception of a write-enable signal at a control input 18a; advantageously, the current is of a pulsed nature, to produce a light pulse signal having a duration from a minimum time interval on the order of 10 nanoseconds to a maximum time interval on the order of 1 microsecond, with powers levels on the order of 1-20 milliwatts.

Preferred values for nucleating micrometer size domains in a gadolinium terbium cobalt (GdTbCo) film is by locally heating the film with seven milliwatts of laser power for a 300 nanosecond pulse duration without an externally applied magnetic field. A domain written with a pulse of 300 nanoseconds duration can be completely erased by a succeeding pulse of 100-200 nanoseconds duration at the same power level. With 12 milliwatts of laser power, a domain written with a 100 nanosecond pulse can be erased by a 30-80 nanosecond pulse; a domain written with a 150 nanosecond pulse can be erased with a 35-130 nanosecond pulse; and a domain written with a 200 nanosecond pulse can be erased with a 45-175 nanosecond pulse.

The beam focusing means 19 should be configured to focus the beam, at the half power diameter thereof, to an area having a diameter less than the diameter D of the region to be heated. Thus localized heating will raise the temperature, and cause a localized decrease in the coercivity, of substantially only the one region (e.g., region N, see FIG.2) into which data is to be written.

The datum contained in any written region 11d-r can be non-destructively read therefrom by causing a reading light beam of plane-polarized light 21 (of amplitude insufficient to heat to a temperature high enough that the magnetization changes in any region upon the reading beam impinges) to be projected in the direction of arrow D, toward the disk surface 11c. A portion of the impingent light is reflected from the region surface 11b; the reflected beam polarization is rotated in a direction dependent upon the direction in which the net magnetic moment of the region extends. Therefore, if a preselected polarization of the reflected beam can be analyzed to determine the binary state of the datum stored in the region being read. For example, a separate laser diode 23, of lower output power than the output power of writing laser diode 18, may provide a beam 24 of light which is polarized by passage through a polarizing means 26. It should be understood that a single, variable-power laser diode can be used with known optics to provide both a lower-power polarized reading beam and a higher-power writing beam to essentially the same region 11d (which region is the union of the regions 11d-r and 11d-w as the distance along tract 42 is reduced toward zero). The polarized beam 28 is focused by lens means 30 to a diameter less than the diameter of region 11d-r, after passage through a beam-splitting means 32. The reflected beam 34, traveling in the direction of arrow E away from disk 11, is redirected by means 32. The redirected beam 36 is focused, by lens means 38 and the like, upon the active portion of a detector means 40, which provides, at a disk data read output 40a, a logic output signal having a state commensurate with the state of the net magnetic moment of the region 11d-r being read. The present invention facilitates the direct over-writing or erasing of previously written information in selected regions of the magneto-optic medium. The method employs the self demagnetizing field created within a reheated region by the specially formulated thin film magneto-optic recording medium to reverse the net magnetization of the region and thus eliminate the requirement of the prior art for any externally applied bias magnetic filed. The physical processes believed to be involved in the new method will be described hereinafter in conjunction with Figures 2a-2h but first, one particular application (referred to as the "read before write" approach) of the self-inverting data modifying method of the present invention will be described.

In accordance with the invention, ur method to over-write the binary value of each bit of a multiplicity N of sequentially storable bits of a new data sequence over the binary value presently stored in each of the associated N sequential storage regions, causes each associated region to be interrogated and the present value of the bit stored in that region to be read therefrom. The read-out data value is then compared with the new data value to be stored in that region. If the comparison indicates that the proper binary data value is already stored in the interrogated region 11d-r, action is not necessary and comparison of the next sequential bit of new data is made against the value of the next data bit already stored in the magneto-optic media layer. If the comparison indicates that the wrong binary value is presently stored in the interrogated region, an over-write enable signal is provided to request heating of the interrogated region, to a temperature above the compensation temperature $T_c$ of the magneto-optic material (and in the absence of any substantial magnetic field external to the storage media layer and deliberately applied to reverse the net magnetic moment) to cause the actual net magnetic moment M in that region to be self-inverted and then be maintained in a stable magnetic domain. Because the disk is rotating, preferably at a well-regulated speed, the region 11d-r which was read will have moved from the location at which regions are read, along an imaginary circular track 42, to another position; the actual position at which over-writing of a region (now identified as a region 11d-w to be overwritten) occurs should be somewhat beyond that required for a normal read-before-write decision sequence to occur, to allow for adjustments and the like. A time delay may be introduced to cause the over-write-enable signal, resulting from the read and compare operations, to enable the over-write energy source only at the time when the proper region has arrived at the position 11d-2 at the focus of the over-write beam 15.

The read-before-write (e.g., read-compare-delay-enable) operational sequence may be obtained at least in part, for example, by the functions of a subcircuit 50 such as is illustrated in FIG. 4b. The data read from the disk is, after suitable buffering and processing after output 40a, introduced at a first input 50a of the subcircuit. In one possible embodiment, the incoming data is first delayed, in a data delay means 52, for the time interval required for the region 11d-r in which the read magnetic domain resides to advance to a preselected position just prior to the position at which region 10d-w can be over-written. The delayed read data bit value is provided to a first input 54a of a comparison means 54, e.g., an exclusive-OR (XOR) gate. The incoming data bit value is provided to a second subcircuit input 50b and is coupled to other input 54b of the XOR gate. If both gate inputs are of the same binary value, then gate output 54c will be at a first level, e.g., a logic zero state, while the output 54c will be at the opposite second level, e.g., the logic one state, only if both input states are different. The gate output is connected to the data D input of a flip-flop logic element 56, which receives a clock C input signal from a sychronization SYNC. signal subcircuit input 50c. This SYNC. signal is prepared, in manner well known to the arts, from at least those sychronization signals provided by formatting of the disk storage regions. Thus, the logic level at the comparison means output 54c is clocked through to the Q output of the flip-flop only at such time as that output signal should be properly present at the subcircuit output 50d, for coupling to the enabling output 18a of the laser/power supply, for causing a pulse of laser light to be focused upon the associated storage region, which has now been moved from the location at which a region 11d-r is read to the location at which a region 11d-w is over-written. It should be understood that the comparison can be carried out first, as by connection of input 50a to gate input 54a, with placement of the delay means 52 after the comparison means and immediately prior to the synchronization means 56. It should also be understood that the delay means 52 can be positioned after the synchronization means 56. Further, it is preferable that the data delay means itself receive a clock signal, as at input 50e, recovered from the actual read data, to cause the desired N region, or domain, delay to occur without loss of accuracy. Additionally, another reading station (not shown) may be located after the overwriting station (of elements 18 and 19) to re-read the region and verify that the net magnetic moment of the domain has in fact been reversed and the value of the data bit stored in that region has been actually over-written.

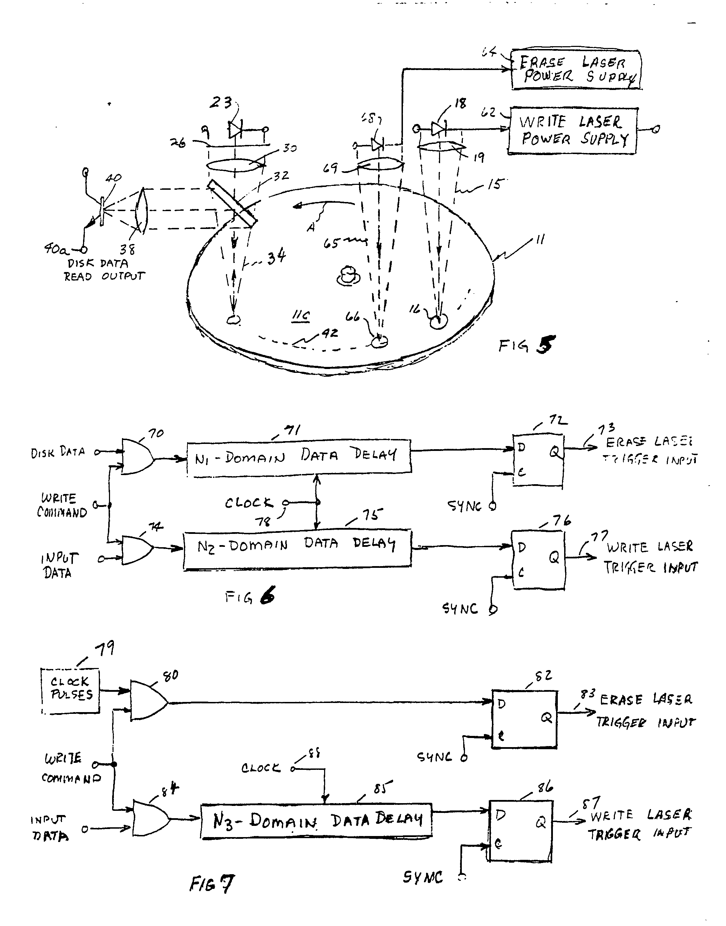

For the erase-before-write operation, the apparatus is modified as shown in FIG. 5 by adding a second beam of heating radiation 65 located between the write beam 15 and the read beam 34 focused on the same disk track 42. A laser diode 68 provides a beam of optical radiation which is focused by a lens 69 to direct the laser beam to the track 42 on the recording medium in a manner similar to laser diode 18 and lens 19. Laser diode 68 is connected to an erase laser power supply 64 and laser diode 18 is connected to a write laser power supply 62. The laser power supplies provide current pulses to their respective laser diodes in response to applied trigger pulses. The pulse magnitude is selected in accordance with the characteristics of the medium, the thickness of the medium, and rotating speed of the disk. For twelve milliwatts of laser power in the diodes, the write pulse provided by write laser power supply 62 could, for example, be 150 nanoseconds in duration, and the corresponding erase pulses provided by erase laser power supply 64 would have a pulse duration of approximately 90 nanoseconds.

The circuit arrangement shown in FIG. 6 can be used with the FIG. 5 apparatus to provide a selective erase-before-write system. The disk data read output from detector 40 (terminal 40a in FIG. 5) is connected to the disk data input of an AND gate 70, the other input to the AND gate being connected to receive a write command. The data to be recorded is supplied to an input data terminal of an AND gate 74, the other input of this AND gate also being connected to receive the write command.

The output of AND gate 70 passes through an $N_1$-domain data delay circuit 71 and the output of AND gate 74 passes through an $N_2$-domain data delay circuit 75. The delay in circuit 71 corresponds to the time required for a domain to travel from the read station (beam 34) to the erase station (beam 65). The delay in circuit 75 corresponds to the time required to travel from the read station to the write station (beam 15). Preferably, the delay circuits are controlled by clock pulses at terminal 78 synchronized with the incremental disk movement.

The outputs of delay circuits 71 and 75 are connected to the data D inputs of flip-flop circuits 72 and 76, respectively. The clock C inputs receive conventional sync signals. The Q output 73 of flip-flop circuit 72 is connected to the trigger input of erase laser power supply 64 and the Q output 77 of flip-flop circuit 76 is connected to the trigger input of write laser power supply 62.

In explaining the operation of the erase-before-write system a "0" corresponds to a low signal level and the initial bias state of the magneto-optic medium, whereas a "1" corresponds to a high signal level and the magnetic state of a domain recorded on the magneto-optic medium. In the presence of a write command, a domain passing the read station produces a "1" which passes through the conditioned AND gate and delay circuit 71 to produce a trigger pulse to energize laser diode 68. The laser pulse from diode 68 erases the domain as it passes under the erase station. Thus, in the presence of a write command, any domain detected at the read station is erased at the erase station, and therefore the recording medium is in a known state (the initial bias "0" state) when it reaches the write station. If the data input for AND gate 74 is at the "1" level when the write commend is present, this data value passes through delay circuit 75 to develop a trigger pulse to pulse the write laser diode 18 to "write" a domain as the same region on the recording medium passes under the write station thereby recording a "1" on the recording medium. On the other hand, if the data input is a "0", then the write laser diode 18 is not pulsed as the region passes the write station and the recording medium remains at the "0" value.

AND gate 74 compares the input data to the known "0" state of the medium at the write station and passes a pulse through the delay to pulse the write laser 18 only when the input data bit is different from the known state.

FIG. 7 illustrates a circuit arrangement for a pulsed erase-before-write which does not require use of the read station or exact timing of erase pulses. In the presence of a write command, the erase laser is pulsed at a rate sufficient to produce at least two laser pulses as a recorded domain passes under the erase station. A reliable complete erase of domains can be achieved if a laser erase pulse hits within the center 75% area of the domain. Thus, if the erase laser pulse rate is at least twice the rate at which domains pass under the erase station, at least one pulse will hit within the center 75% of the nominal domain diameter. In this fashion all domains along a strip prior to the write station are erased and the recording medium is thus placed in a known state (i.e., the initial bias "0" state).

In the pulsed erase-before-write arrangement a clock pulse generator 79 produces clock pulses at a rate at least twice the rate at which domains pass under the erase station. These clock pulses pass through an AND gate 80 when conditioned by a write command to provide trigger pulses to erase laser power supply 64. Laser diode 68 is pulsed and strip erases the recording disk while a write command is present.

The input data is supplied to one input of an AND gate 84, the other input of the AND gate being connected to receive the write command. The output of AND gate 84 is connected to the data D input of a flip-flop circuit 86 which in turn supplies trigger pulses to the write laser power supply 62. The $N_3$-domain data delay circuit 85 provides a time delay corresponding to the disk travel time from the erase station (beam 65) to the write station (beam 15). While the write commend is present, an input data "1" produces a pulse to energize laser diode 18 to record a "1" produces a pulse to energize laser diode 18 to record a "1" on the recording medium whereas in input data "0" does not pulse laser diode 18 so that the recording medium remains in the "0" state.

## Claims

1. A magneto-optic information storage system comprising: a thin film, magneto optic recording medium with uniaxial anisotropy perpendicular to the surface thereof having a compensation temperature at least a few tens of degrees C above room temperature; a source for irradiating selective regions of said medium to heat same above said compensation temperature; a power circuit for energizing said irradiating source at a "write" energy level and at a lower energy "erase" level; a write control circuit for energizing said irradiating source via said power circuit at said "write" energy level sufficiently to create a spot domain of reverse magnetic polarity on said medium; and an erase control circuit for energizing said irradiating source via said power circuit at said "erase" energy level when a domain of reverse magnetic polarity is not desired.

2. A magneto-optic information storage system comprising: a thin-film magneto-optic recording medium having its net magnetization perpendicular to a plane containing said thin film medium, said medium being formulated to exhibit self-inversion of the direction of net magnetization in at least a portion of a magnetic domain wall bounded region thereof at an elevated temperature above a compensation temperature of the medium and below the Curie temperature of the medium in the absence of an externally applied bias magnetic field; irradiating means for temporarily irradiating at least portions of selected regions of the medium with electromagnetic radiation imparting sufficient energy to heat at least said portions from ambient temperature to said elevated temperature whereat the net magnetization of at least said portions is reversed without an externally applied bias magnetic field and whereby, following cooldown to ambient temperature, the net magnetization of at least said portions at ambient temperature is also reversed; write means connected to control said irradiating means for temporarily impinging a first pulse of light having a first duration and a first power level upon selected areas of the medium to create magnetic domain wall bounded regions therein and to orient the net magnetization of said regions in a first direction; and erase means connected to control said irradiating means for impinging a second pulse of light upon at least portions of selected ones of said regions to re-orient the net magnetization of at least said portions in a second direction opposite to said first direction, said second pulse of light energy having a second duration and second power level, and wherein the energy imparted by said second pulse is less than the energy imparted by said first pulse.

3. A system as claimed in claim 2 wherein said medium is ferrimagnetic with a compensation temperature between 40°C and 140°C and a Curie temperature at least 50°C above said compensation temperature.

4. A system as claimed in claim 2 wherein said medium is ferrimagnetic with a compensation temperature between 60°C and 100°C and a Curie temperature at least 100° above said compensation temperature.

5. A system as claimed in claim 3 or 4 wherein said medium comprises an amorphous alloy including gadolinium, terbium and at least one transition-metal element.

6. A system as claimed in claim 5 wherein said alloy contains gadolinium and terbium in approximately equal proportions.

7. A system as claimed in any of claims 2 to 6 wherein said first and second power levels are the same, and said second duration is less than said first duration.

8. A system as claimed in any of claims 2 to 6 wherein said first and second durations are the same, and said second power level is less than said first power level.

9. A method for direct over-write of data by recording domains of reverse magnetic polarity along a track on a magneto-optic recording medium comprising:
providing a thin film layer of ferrimagnetic recording medium having a compensation temperature in the range of 40° to 140°C and a Curie temperature at least 50°C above said compensation temperature;
using a laser movable relative to said recording medium to heat selected data spots along said track above said compensation temperature but not significantly above said Curie temperature; said laser being energized at a higher energy level sufficient to record a domain without applying any reversible external magnetic bias when a recorded domain is desired; and
said laser being energized at a lower energy level insufficient to record a new domain but sufficient to erase any previously recorded domains without applying any reversible external magnetic bias where a domain is not desired.

10. A method according to claim 9 wherein said ferrimagnetic recording medium has a compensation temperature in the range of 60°C to 100°C and a Curie temperature at least 100°C above said compensation temperature.

11. A method according to claim 9 or 10 wherein said ferrimagnetic medium is an alloy including gadolinium, terbium and at least one transition-metal element.

12. A method according to claim 9, 10 or 11 wherein the time required to cool to room temperature after said heating of selected data spots is less than the time between successive heating operations of the same data spot.

13. A method according to any of claims 9 to 12 wherein said laser energizations at said higher energy level and at said lower energy level are at the same power level but at different pulse durations.

14. A method according to any of claims 9 to 12 wherein said laser energizations at said higher energy level and at said lower energy level are at the same pulse duration but at different power levels.

15. A system for direct-overwrite recording on a magneto-optic medium without external magnetic bias comprising: a thin film, ferrimagnetic recording medium with uniaxial anisotropy perpendicular to the surface thereof having a compensation temperature at least a few tens of degrees C above room temperature;
a laser source for irradiating selective regions of said medium to heat same above said compensation temperature;
a power circuit for energizing said laser source at a "write" energy level and at a lower energy "erase" level;
a write control circuit for energizing said laser source via said power circuit at said "write" energy level sufficiently to create a spot domain of reverse magnetic polarity on said medium; and
an erase control circuit for energizing said laser source via said power circuit at said "erase" energy level when a domain of reverse magnetic polarity is not desired.

16. A system according to claim 15 wherein said recording medium has a compensation temperature in the range of 40°C to 140°C and a Curie temperature at least 50°C above said compensation temperature.

17. A system according to claim 15 wherein said recording medium has a compensation temperature in the range of 60°C to 100°C and a Curie temperature at least 100°C above said compensation temperature.

18. A system according to claim 15, 16 or 17 wherein said laser source heats said medium above said compensation temperature but not above said Curie temperature.

19. A system according to any of claims 15 to 18 further including a read control circuit for energizing said laser source via said power source at a power level not sufficient to alter the magnetic state of the recording medium when not energized at either said "write" level or said "erase" level.

20. A system according to any of claims 15 to 19 wherein said ferrimagnetic medium includes gadolinium.

21. A system according to any of claims 15 to 19 wherein said ferrimagnetic medium includes terbium in approximately equal proportion with gadolinium.

22. A system according to any of claims 15 to 21 wherein said "write" and "erase" energy levels are by pulses at the same duration but at different power levels.

23. A system according to any of claims 15 to 22 wherein said "write" and "erase" energy levels are by pulses at the same power level but at different durations.

24. A method for strip erasing magnetic domains previously recorded along a track on a magneto-optic recording medium comprising:
providing a thin film layer of ferrimagnetic recording medium having a compensation temperature above 40°C;
using a laser to provide laser energy to progressively heat a portion along said track for a distance at least 1.5 times the track width to

14

above said compensation temperature;

said laser energy applied to said track being at an energy level insufficient to record new domains of reverse magnetic polarity, but sufficient to erase previously recorded magnetic domains.

25. A method for recording elongated domains of reverse magnetic polarity along a track on a magneto-optic recording medium, comprising: providing a thin film ferrimagnetic layer of a rare earth, transition metal alloy having a compensation temperature above 40°C;

using a laser beam to progressively heat at least a portion of said track above said compensation temperature;

said laser energy applied to said track being sufficient to record an elongated domain without applying any significant magnetic bias external of said recording medium.

26. A method for recording elongated domains of reverse magnetic polarity along a track on a magneto-optic recording medium and for strip erasing previously recorded domains, comprising:

a thin film layer of ferrimagnetic recording medium having a compensation temperature above 40°C;

using a laser movable relative to said recording medium to progressively heat at least a portion of said track;

said laser being energized at a higher energy level sufficient to record elongated domains without applying any reversible external magnetic bias when a recorded domain is desired along said tracks; and

said laser being energized at a lower energy level insufficient to record a new domain but sufficient to erase any previously recorded domains.

27. A system for recording on a magneto-optic medium without a reversible external magnetic bias comprising:

a thin film, ferrimagnetic recording medium with uniaxial anisotropy perpendicular to the surface thereof having a compensation temperature at least a few tens of degrees C above room temperature;

a laser source movable relative to said recording medium for irradiating selective regions of said medium to heat same above said compensation temperature;

a power circuit for energizing said laser source at a "write" energy level and at a lower energy "erase" level;

a write control circuit for energizing said laser source via said power circuit at said "write" level sufficiently to create an elongated domain on said medium; and

an erase control circuit for energizing said laser source via said power circuit at said "erase" level when a strip erase of said medium is desired.

28. A method for over-writing data on a magneto-optic recording medium having a compensation temperature tens of degrees C.

above room temperature, comprising the steps of:

(a) erasing any previously recorded magnetic domain in the region on the recording medium to be recorded by temporarily heating the region being erased above the compensation temperature in the absence of any substantial externally provided magnetic bias field to thereby establish a known magnetic state in said recording medium;

(b) receiving data bits to be recorded;

(c) generating a write signal when a data bit and said known state are not the same; and

(d) writing a magnetic domain in said previously erased region only in response to said write signal by temporarily heating an area above the compensation temperature in the absence of any substantial externally provided magnetic bias field.

29. A system for over-writing data on a magneto-optic recording medium comprising:

(a) a thin film ferrimagnetic recording medium with uniaxial anisotropy perpendicular to the surface thereof having a compensation temperature sufficiently above room temperature to permit erasure of previously recorded magnetic domains by temporary heating above said compensation temperature without the application of a substantial external magnetic bias field;

(b) write means for temporarily heating selected regions of said recording medium above said compensation temperature to create magnetic domains therein using the self-demagnetizing field within said recording medium;

(c) erase means for temporarily heating selected regions of said recording medium above said compensation temperature to erase previously created domains using the self-demagnetizing field within a domain being erased to establish a known state in said medium;

(d) an erase controller for controlling said erase means to erase regions of said recording medium to be recorded;

(e) data receiving means for receiving data bits to be recorded;

(f) comparing means for comparing received data with said known state to provide a write signal where a received data bit is different than said known state; and

(g) a write controller for controlling said write means to create a magnetic domain only in response to said write signal when said received data bit is different than said known state.

FIG. 1

FIG. 3

FIG. 1M

FIG. 1a — TIMING CLOCK

1 2 3 4 5 6 7 8 9 10 11 12 13 14 15 16 17 18

FIG. 1b — PRIOR RECORDED DATA

FIG. 1c — WRITE / ERASE PULSES

FIG. 1d — AFTER RECORDING

EP 0 316 188 A2

OVER-WRITE

FIG.IA

FIG.IB $P_3$ $P_2$ $P_1$

FIG.IC

FIG.ID

FIG.IE

FIG.IF

FIG. 2a

FIG. 2b

FIG. 2c

FIG. 2d

FIG. 2e

FIG. 2f

FIG. 2g

FIG. 2h

FIG. 3A

FIG. 3B

FIG. 3C

FIG. 3D

*FIG. 4*

DISK
DATA
READ
OUTPUT

LASER
POWER-
SUPPLY

*FIG. 4a*

*FIG. 4b*

DISK
DATA

N-DOMAIN DATA DELAY MEANS

INPUT DATA

CLOCK

SYNC

WRITE
LASER
TRIGGER
SIGNAL
TO
INPUT
18a

FIG 5

FIG 6

FIG 7

DISK DATA READ OUTPUT

ERASE LASER POWER SUPPLY

WRITE LASER POWER SUPPLY

DISK DATA

WRITE COMMAND

INPUT DATA

$N_1$-DOMAIN DATA DELAY

$N_2$-DOMAIN DATA DELAY

CLOCK

D Q ERASE LASER TRIGGER INPUT

D Q WRITE LASER TRIGGER INPUT

SYNC

CLOCK PULSES

WRITE COMMAND

INPUT DATA

CLOCK

$N_3$-DOMAIN DATA DELAY

D Q ERASE LASER TRIGGER INPUT

D Q WRITE LASER TRIGGER INPUT

SYNC